Europäisches Patentamt

European Patent Office

Office européen des brevets

(11) Numéro de publication: **0 509 933 B1**

# FASCICULE DE BREVET EUROPEEN

(45) Date de publication du fascicule du brevet: **06.09.95**  (51) Int. Cl.$^6$: **B23K 26/04**, G02B 26/08

(21) Numéro de dépôt: **92401095.2**

(22) Date de dépôt: **17.04.92**

(54) **Procédé d'alignement à distance d'un faisceau laser sur l'ouverture d'une buse et tête de focalisation appareillée pour l'usinage à distance.**

(30) Priorité: **19.04.91 FR 9104877**

(43) Date de publication de la demande:
**21.10.92 Bulletin 92/43**

(45) Mention de la délivrance du brevet:
**06.09.95 Bulletin 95/36**

(84) Etats contractants désignés:
**DE FR GB IT**

(56) Documents cités:
**EP-A- 0 154 866**
**EP-A- 0 217 077**
**US-A- 4 855 564**

**PATENT ABSTRACTS OF JAPAN vol. 13, no. 20 (M-785)(3368) 18 Janvier 1989 & JP-A-63 230 291 (KOMATSU LTD) 26 Septembre 1988**

(73) Titulaire: **COMMISSARIAT A L'ENERGIE ATO-MIOUE**
**31-33, rue de la Fédération**
**F-75015 Paris (FR)**

(72) Inventeur: **Alfille, Jean-Pascal**
**1, Allée du Nivernais**
**F-92140 Clamart (FR)**
Inventeur: **de Beaucourt, Philippe**
**38 rue Saint Sulpice**
**F-75006 Paris (FR)**

(74) Mandataire: **Poulin, Gérard et al**
**Société BREVATOME**
**25, rue de Ponthieu**
**F-75008 Paris (FR)**

## Description

La présente invention concerne un procédé permettant d'aligner un faisceau laser sur l'ouverture d'une buse. Elle concerne également une tête de focalisation appareillée pour usiner, dans laquelle on utilise le procédé nommé ci-dessus.

L'invention trouve de nombreuses applications notamment dans le domaine industriel avec le réglage optique des robots lasers portiques et polyarticulés ou encore un domaine plus spécifique avec le réglage optique à distance des robots lasers lors d'interventions en milieux hostiles.

Ce procédé de réglage peut être mis en application pour les robots portiques qui permettent, par exemple, la découpe et la soudure de caisses automobiles complètes. Pour ces procédés laser, il est nécessaire que la tête de découpe, ou de soudure, puisse s'orienter dans l'espace tout en conservant le faisceau focalisé dans la buse d'éjection des gaz de procédés. La méthode de réglage et la tête de focalisation proposées dans ce brevet permettent un réglage d'alignement précis des axes du robot, de l'axe de la tête de focalisation vis-à-vis de l'axe du faisceau laser, assurant ainsi la sortie du faisceau focalisé par le trou de buse, quelle que soit la position de la tête de focalisation dans l'espace car, pour chaque modification de réglage selon l'un des axes du robot, une vérification de l'alignement du faisceau sur l'ouverture de la buse a été effectuée.

Ce procédé peut être mis en application dans des enceintes dont l'intérieur est difficilement accessible par l'homme ; il s'agit, par exemple, de cellules actives, c'est-à-dire des enceintes contenant des matériaux fortement radioactifs.

L'usinage par laser d'une pièce située à l'intérieur d'une cellule active, s'effectue grâce à un faisceau laser produit par un laser de puissance extérieur à la cellule et pénétrant dans ladite cellule par un orifice d'introduction par l'intermédiaire d'un conduit de transfert. Ce faisceau doit être focalisé sur la pièce à usiner ; sur cette pièce ainsi échauffée, peut être également envoyé un gaz réagissant au contact de ladite pièce.

Selon un mode de réalisation connu, le dispositif comporte des moyens pour focaliser ledit faisceau ainsi qu'une buse permettant d'éjecter le gaz sur la pièce à usiner.

Généralement, l'ouverture de la buse est de petit diamètre afin d'assurer une bonne éjection des gaz de procédés lors de l'usinage de la pièce. Cependant, la distance parcourue par le faisceau entre le laser et la buse est généralement très longue. Il est donc difficile d'aligner un tel faisceau sur l'ouverture d'une buse, en particulier lorsque le parcours suivi par le faisceau comporte un certain nombre de segments articulés constituant le bras d'un robot.

Certains dispositifs connus comportent des moyens pour émettre un faisceau laser et pour l'orienter selon deux axes de rotation, ainsi que des moyens de détection dudit faisceau, orientables selon deux axes. La position du faisceau est repérée, à son émission, par un premier détecteur de positions et, à sa réception, par un second détecteur de positions. L'alignement du faisceau entre ces deux détecteurs se fait au moyen d'un ordinateur apte à gérer les mouvements autour des axes de rotation.

Un tel dispositif est décrit dans le document US-4 855 564.

Ce procédé d'alignement a plusieurs inconvénients, notamment celui de nécéssiter une bonne précision du positionnement des détecteurs.

Le procédé selon la présente invention permet justement de résoudre ce problème de positionnement car il est basé sur une différence d'informations de position du faisceau.

L'invention a également l'avantage de permettre le réglage à distance du faisceau laser selon les axes du robot et de la tête de focalisation ; aucune intervention humaine n'est nécessaire au niveau de la tête de focalisation.

L'invention a également l'avantage de n'utiliser qu'un seul détecteur, quel que soit le nombre d'axes du robot à régler, le détecteur étant inséré à la tête de focalisation en extrémité de robot.

De façon plus précise, la présente invention a pour objet un procédé d'alignement d'un faisceau laser sur l'ouverture d'une buse, dans lequel on utilise :
- un laser pilote ;
- un bras de transmission comportant au moins un segment, des moyens d'introduction de faisceau laser selon un premier axe dans ledit bras, ainsi qu'une tête de focalisation située à l'extrémité du bras de transmission, orientée selon un dernier axe et munie d'au moins un composant optique de focalisation ;
- des moyens de modification de trajectoire du faisceau laser en translation et en rotation par rapport à un axe du bras de transmission,

caractérisé en ce que la tête de focalisation et munie d'un détecteur de positions apte à mesurer la position du faisceau laser par rapport au dernier axe et en ce qu'il consiste, pour tout axe de segment du bras de transmission, partant du laser vers la tête de focalisation :

a) à mesurer un défaut angulaire $\Delta\alpha$ entre le faisceau laser et l'axe du segment à régler, en focalisant le faisceau laser au moyen du composant optique de focalisation et en dirigeant ce faisceau laser vers le détecteur de positions selon une première et une seconde positions angulaires obtenues en agissant sur des moyens de rotation de chacun des segments autour de leur axe de façon à ce que ledit détecteur mesure deux positions du faisceau laser ;

b) à modifier ce défaut angulaire par réglage des moyens de modification de trajectoire du faisceau laser ;

c) à réitérer les étapes a) et b) jusqu'à l'obtention d'un défaut angulaire minimum ;

d) à mesurer un défaut en translation Δd entre le faisceau laser et l'axe du segment à régler en dirigeant le faisceau laser vers le détecteur de positions de façon à ce qu'il mesure la position du faisceau laser dans une première et une seconde positions angulaires obtenues à l'aide des moyens de rotation, cette mesure de position du faisceau étant effectuée soit en amont du composant optique de focalisation en déplaçant le détecteur de positions, soit en aval dudit composant optique en escamotant ce composant optique ;

e) à modifier ce défaut en translation par réglage des moyens de modification de trajectoire du faisceau laser ;

f) à réitérer les étapes d) et e) jusqu'à l'obtention d'un défaut en translation minimum.

Dans le cas du premier axe, le procédé comporte également les étapes consistant à :

g) vérifier l'alignement du faisceau laser sur les moyens d'introduction dudit faisceau ; et

h) lorsque cet alignement n'est pas réalisé, modifier l'orientation du premier axe du bras de transmission et réitérer les étapes a) à f).

De façon avantageuse, la mesure du défaut angulaire Δα consiste à :

- déterminer, par le détecteur de positions, une première tache focale du faisceau laser ;
- effectuer une rotation, d'un angle $\beta$, du segment du bras de transmission à régler ainsi que des segments aval dudit segment à régler, et/ou de la tête de focalisation ;
- déterminer, par le détecteur de positions, une seconde tache focale du faisceau laser ;
- évaluer la distance h entre l'axe du bras à régler et le milieu du segment à partir de la distance b mesurée entre la tache et la tache, cette distance h correspondant à :

$$h = \frac{b}{2} \sqrt{\frac{1 + \cos \beta}{1 - \cos \beta}}$$

De même, la mesure du défaut en translation Δd consiste à :

- déterminer, par le détecteur de positions, un premier impact du faisceau laser ;
- effectuer une rotation, d'un angle $\beta$, du segment du bras de transmission à régler ainsi que des segments aval dudit segment à régler, et/ou de la tête de focalisation ;
- déterminer, par le détecteur de positions, un second impact du faisceau laser ;
- évaluer la distance H entre l'axe du bras à régler et le milieu du segment à partir de la distance B mesurée entre l'impact et l'impact, cette distance H correspondant à :

$$H = \frac{b}{2} \sqrt{\frac{1 + \cos \beta}{1 - \cos \beta}}$$

Un dispositif de réglage pour bras articulé de transmission de faisceau laser met en oeuvre le procédé décrit précédemment et comprend:

- un laser pour émettre un faisceau ;
- une tête de focalisation assurant la convergence du faisceau sur l'ouverture d'une buse, ainsi que des moyens optiques de focalisation ;
- un bras de transmission comportant au moins un segment orienté selon un premier axe, ledit bras étant apte à guider ledit faisceau vers la tête de focalisation orientée selon un dernier axe ;
- des moyens de modification de trajectoire du faisceau laser en translation par rapport à un axe du bras ; et
- des moyens de rotation pour tourner chacun des segments du bras de transmission et/ou la tête de focalisation autour de leur axe respectif,

caractérisé en ce que la tête de focalisation est munie d'un détecteur de positions apte à mesurer la position du faisceau laser par rapport au dernier axe, en ce que soit le détecteur de positions est déplaçable, soit les moyens optiques de focalisation sont, au moins en partie, escamotables pour permettre de déterminer un écart en rotation Δα et un écart en translation Δd entre la trajectoire du faisceau et les axes des segments du bras et/ou de la tête de focalisation, et en ce qu'il comporte des moyens de calcul pour évaluer et mémoriser les différentes positions du faisceau laser, puis calculer les écarts en translation et en rotation entre ces positions.

Avantageusement, les moyens de rotation comportent un moteur assurant une rotation d'un angle $\beta$ de la tête de focalisation autour de l'axe afin de décaler le faisceau laser sur le détecteur de positions, ledit moteur étant fixé au bras de façon à ce que la tête de focalisation tourne par rapport audit bras.

De plus, les moyens de rotation comportent en outre une pluralité de moteurs, chaque moteur étant associé à un segment à régler afin d'assurer audit segment une rotation d'angle $\beta$ autour de son axe pour décaler le faisceau laser sur le détecteur de positions contenu dans la tête de focalisation.

Selon l'invention, les moyens optiques de focalisation comportent un miroir escamotable, assurant, dans une première position $M_E$, le renvoi du faisceau sur le détecteur et, dans une seconde position $M'_E$, le passage direct du faisceau vers l'ouverture de la buse.

Selon un mode de réalisation de l'invention, les moyens optiques comportent une lentille de focalisation escamotable.

Selon un mode de réalisation plus industriel, les moyens optiques comportent un miroir parabolique pour focaliser le faisceau laser sur l'ouverture de la buse.

Selon un autre mode de réalisation industriel, les moyens optiques comportent deux miroirs sphériques assurant la focalisation du faisceau laser sur l'ouverture de la buse.

Une application du dispositif au domaine nucléaire nécessite d'utiliser une cellule active extérieure à l'ensemble du bras, cette cellule active comportant un orifice par lequel est introduit le faisceau le long d'un axe et à l'extérieur de laquelle se situent des moyens de modification de trajectoire.

D'autres caractéristiques et avantages ressortiront mieux de la description qui va suivre donnée à titre illustratif et non limitatif en référence aux dessins dans lesquels :

- la figure 1 est une représentation schématique de l'ensemble laser/bras de transmission/cellule active appliqué au domaine nucléaire ;
- la figure 2a est une représentation schématique de la tête de focalisation du dispositif selon un premier mode de réalisation de l'invention ;
- la figure 2b est une représentation schématique de la tête de focalisation suivant une variante plus industrielle de ce premier mode de réalisation ;
- les figures 2c et 2d sont des représentations schématiques de la tête de focalisation selon un second et un troisième modes de réalisation ;
- la figure 3 montre, à partir d'un schéma simplifié de la tête de focalisation, à quoi correspondent le défaut angulaire et le défaut en translation ;

- la figure 4 représente un schéma de principe de la tête de focalisation selon le premier mode de réalisation de l'invention ;
- les figures 5a, 5b et 5c représentent les étapes à appliquer au dispositif selon l'invention pour corriger le défaut angulaire $\Delta\alpha$ ;
- les figures 6a et 6b représentent les étapes à appliquer au dispositif selon l'invention pour corriger le défaut en translation $\Delta d$ ;
- la figure 6c représente schématiquement les tracés obtenus sur le détecteur de positions ;
- la figure 7 montre, par un organigramme, les différentes étapes du procédé selon l'invention ; et
- les figures 8a et 8b illustrent une application de l'invention à un robot polyarticulé ;
- les figures 9a et 9b illustrent une seconde application de l'invention à un robot portique du type industriel.

Durant toute la description, il sera fait référence à un robot polyarticulé, c'est-à-dire un bras de transmission comportant plusieurs segments, étant entendu que le procédé et le dispositif conforment à l'invention sont également applicables à un bras de transmission du faisceau laser formé d'un conduit rectiligne unique.

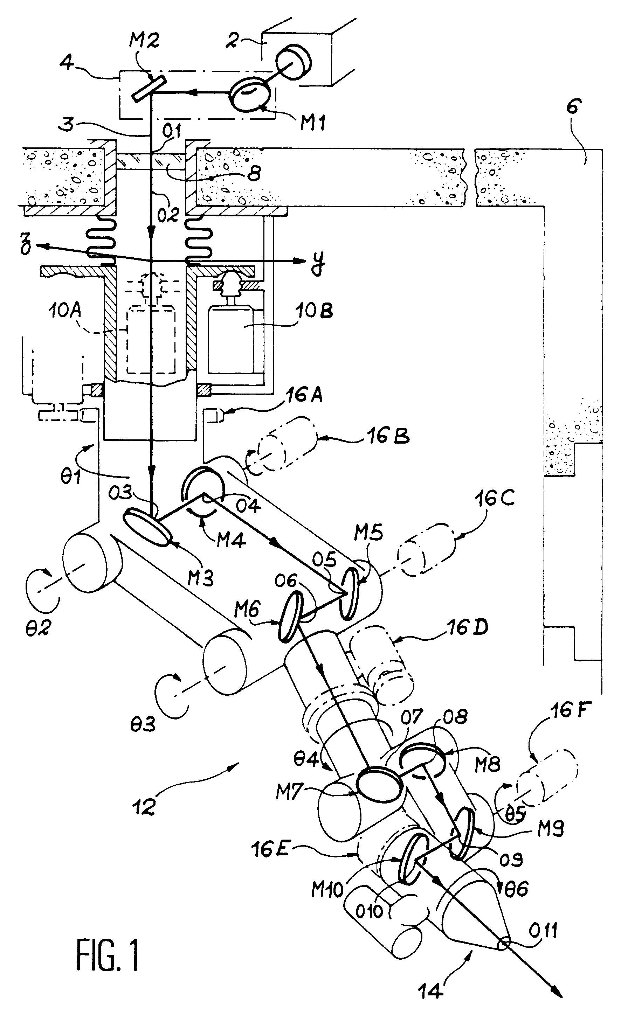

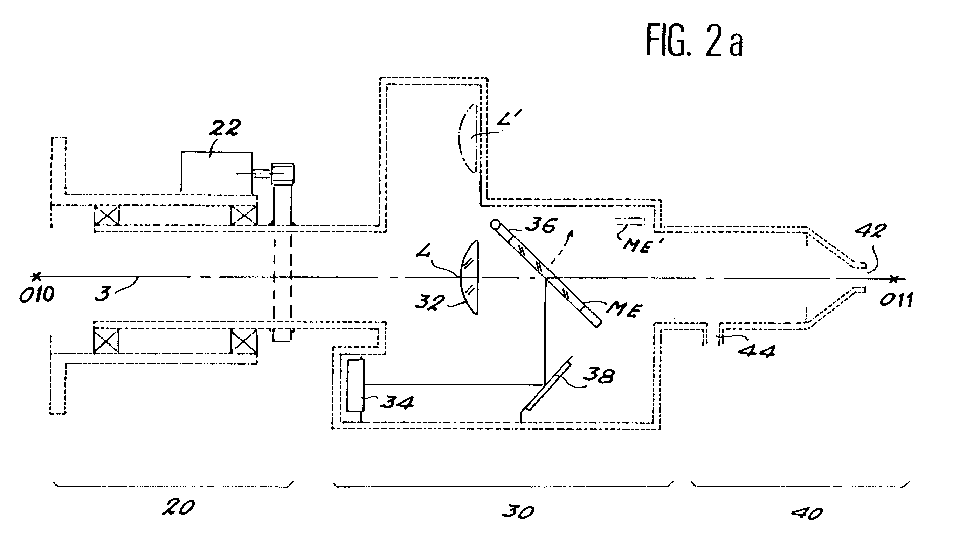

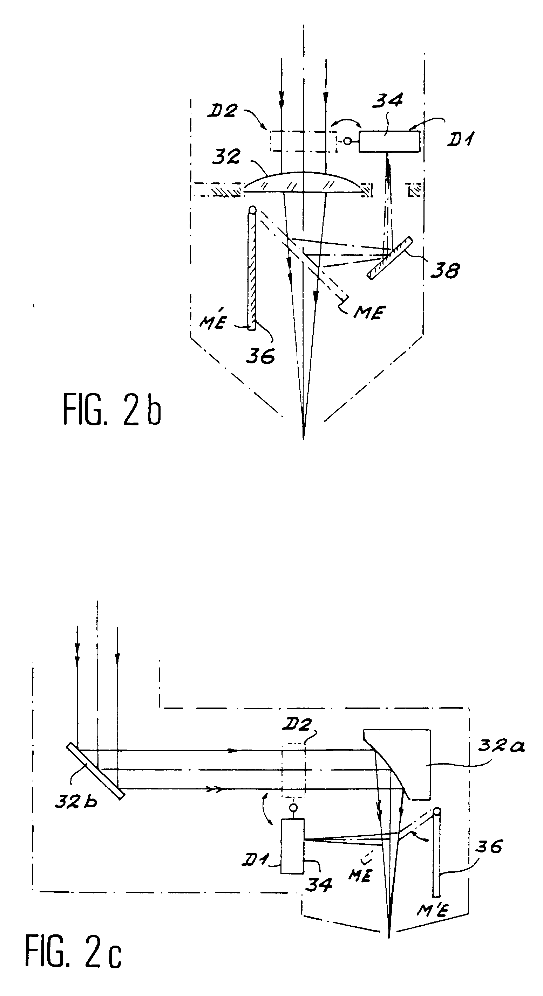

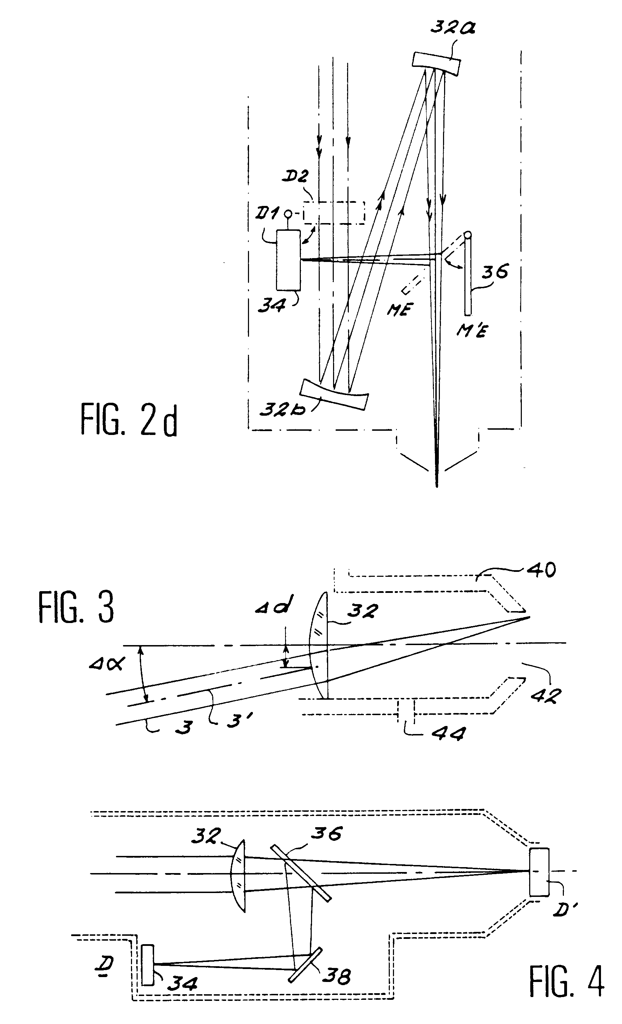

En se référant aux figures 1 et 2, nous décrirons plus particulièrement le dispositif selon un mode de réalisation de l'invention. L'exemple décrit à travers ces figures 1 et 2 concerne le dispositif appliqué au milieu nucléaire et réalisé suivant le premier mode de réalisation, c'est-à-dire avec une lentille de focalisation escamotable. Les figures 3 à 7 permettront de mieux comprendre en quoi consiste le procédé de l'invention.

En référence à la figure 1, le faisceau 3 est émis par la source laser 2 en direction des moyens d'introduction, à savoir un orifice 8 d'introduction dans la cellule active 6 fermé par une fenêtre transparente. Le faisceau 3 est dirigé et orienté de la source laser 2 vers l'orifice 8 par l'intermédiaire de moyens 4 de modification de trajectoire du faisceau. Ces moyens consistent, en fait, en une association de deux miroirs $M_1$ et $M_2$ permettant de modifier la trajectoire du faisceau en translation et/ou en rotation selon deux axes $O_y$ et $O_z$ de l'espace.

Le dispositif d'usinage comporte une structure polyarticulée 12, telle qu'un robot, et des moyens 10 d'orientation en rotation de la structure polyarticulée 12 par rapport à l'axe d'entrée $O_1O_2$ du faisceau 3 par l'orifice 8. Ces moyens 10 comportent deux moteurs 10A et 10B assurant, lors des réglages du faisceau 3, de légères rotations du robot 12 autour des axes respectifs $O_y$ et $O_z$. En particulier, ces deux rotations permettent d'orienter le premier axe du robot $O_2O_3$.

Le dispositif d'usinage comporte également une tête 14 de focalisation liée au robot 12 par un axe mécanique $O_{10}O_{11}$.

Le robot 12 comporte un bras de transmission du faisceau laser constitué d'une pluralité de segments (quatre segments sur la figure représentée) assemblés deux par deux par des articulations mécano-optiques de type connu. En effet, chaque articulation comporte deux miroirs assurant le renvoi du faisceau optique arrivant d'un premier segment pour être transmis dans un second segment, situé en aval dudit premier segment. En considérant le premier segment de bras d'axe $O_4O_5$ et le second segment d'axe $O_6O_7$ reliés par l'articulation $O_5O_6$, le faisceau selon $O_4O_5$ est réfléchi par le miroir M5 vers le miroir M6, puis réfléchi par le miroir M6 vers le second segment.

Un tel dispositif de transmission du faisceau laser entre deux segments d'un bras articulé est décrit dans le brevet français publié sous le numéro FR-2 528 187.

La figure 2a est une représentation de la tête de focalisation centrée autour de l'axe $O_{10}O_{11}$ qui est à la fois l'axe mécanique de rotation de la tête de focalisation 14 et l'axe optique de ladite tête de focalisation.

Cette tête de focalisation 14 peut être subdivisée en trois parties dont chacune a un rôle différent. La première partie est une unité 20 de rotation, la seconde est une unité optique 30 et la troisième est la buse 40 que le faisceau va traverser avant d'arriver sur la pièce à usiner.

L'unité 20 de rotation comprend essentiellement un moteur 22 assurant la rotation de l'ensemble de la tête de focalisation 14 autour de l'axe $O_{10}O_{11}$. En effet, l'unité optique 30 et la buse 40 sont solidaires de l'unité 20 de rotation, ce qui permet une rotation globale de la tête de focalisation 14.

Cette unité 20 est essentielle dans le cas où une très grande précision est nécessaire, ou bien, dans le cas où le robot est placé en milieu hostile.

L'unité optique 30 comprend tous les éléments optiques de la tête de focalisation 14 nécessaires à la mise en oeuvre du procédé selon l'invention. Une lentille 32 de focalisation, placée sur l'axe optique $O_{10}O_{11}$, permet de focaliser le faisceau 3 sur l'ouverture 42 de la buse 40. Un détecteur 34 de positions permet de repérer la position du faisceau 3 par rapport à l'axe optique $O_{10}O_{11}$. Deux miroirs 36 et 38 permettent, par réflexion du faisceau 3 sur lesdits miroirs, de renvoyer ledit faisceau sur le détecteur 34 placé sur un axe autre que l'axe $O_{10}O_{11}$.

Le miroir 36 est escamotable. Ainsi, une première position $M_E$ du miroir 36 permet le renvoi du faisceau 3 sur le second miroir 38, qui lui-même, l'envoie sur le détecteur 34. Une seconde position

$M'_E$ est une position de retrait du premier miroir 36 de sorte qu'il ne joue plus de rôle vis-à-vis du faisceau 3, ce dernier se dirigeant alors directement vers la buse 40.

Selon un mode de réalisation de l'invention, la lentille 32 est escamotable. Tout comme le miroir 36, la lentille 32 connaît deux positions : une première position L sur l'axe optique $O_{10}O_{11}$ permettant à ladite lentille d'intercepter le faisceau 3 et une seconde position L' de retrait de la lentille permettant la réflexion directe du faisceau 3 sur le premier miroir 36.

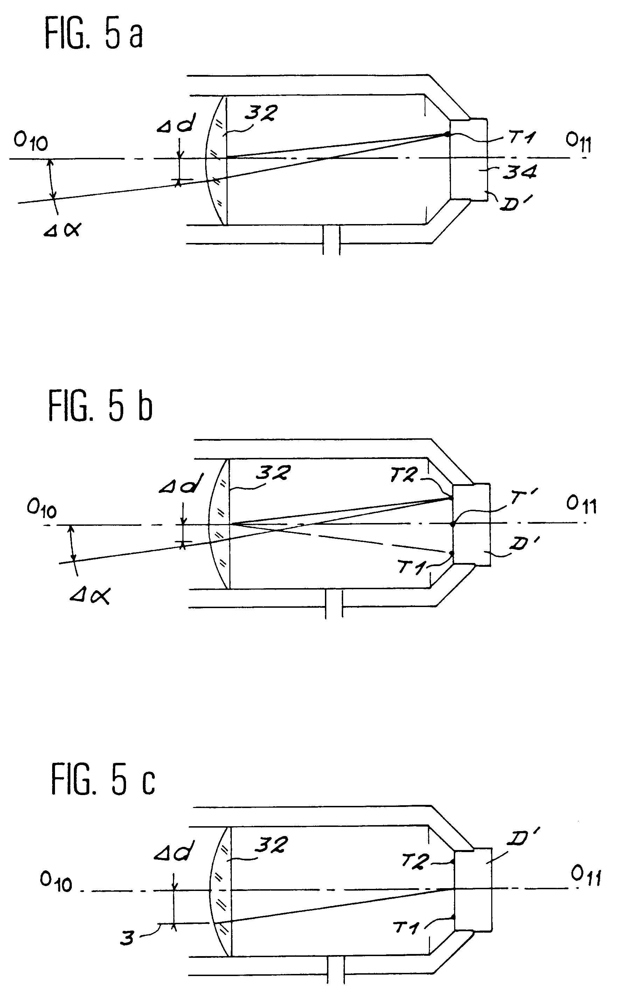

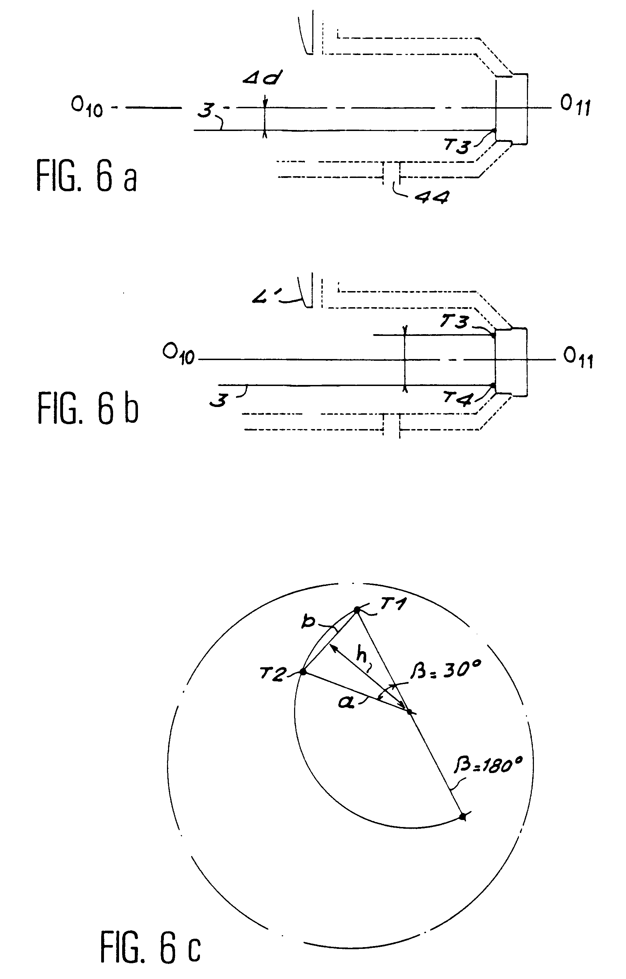

Les rôles du miroir 36 et de la lentille 32 seront décrits plus en détails lors de la description du procédé selon l'invention, dans les figures 5 et 6.

Le rôle de la buse 40 ne diffère pas de celui qu'elle joue dans les dispositifs connus. Par le passage 44, un gaz peut être introduit, qui sera envoyé sur la pièce à usiner. L'ouverture 42 de la buse 40 assure le passage du faisceau 3 focalisé, vers la pièce à usiner.

Le laser 2, généralement utilisé, est un laser de puissance $CO_2$. Lors des réglages de la trajectoire du faisceau 3, il est souvent plus facile d'utiliser un laser pilote $H_eN_e$. Le dispositif selon l'invention permet néanmoins d'utiliser le même laser $CO_2$ à faible puissance si l'on utilise un détecteur de positions sensible à la longueur d'onde du $CO_2$ ($\lambda$ = 10,6 $\mu$m) au lieu d'un détecteur sensible à la longueur d'onde du $H_eN_e$.

Il est également possible, pour visualiser la position du faisceau laser $H_eN_e$, de remplacer le détecteur 34 de positions par un écran dépoli et une caméra, positionnée derrière cet écran.

Selon un mode de réalisation de l'invention, la tête de focalisation peut être une tête de réglage utilisée uniquement pour effectuer les réglages du faisceau laser dans les segments du bras articulé, une tête d'usinage pouvant être fixée sur le robot à la place de la tête de réglage lorsque les réglages ont été effectués.

Selon le mode de réalisation préféré de l'invention, à savoir le mode décrit, les moyens nécessaires au réglage du faisceau laser sont contenus par la tête d'usinage que l'on nomme, dans ce cas, tête de focalisation.

La figure 2b représente schématiquement cette même tête de focalisation dans le cas où la lentille de focalisation est fixe, ce mode de réalisation étant plus facilement applicable du point de vue industriel. Dans ce mode de réalisation, le détecteur de positions peut être déplacé d'une position D1 vers une position D2.

En position D1, le faisceau laser est focalisé par la lentille 32, se réfléchit sur le miroir 36 alors en position ME ; une seconde réflexion de ce faisceau sur le miroir 38 permet le renvoi sur le détecteur de positions 34.

Lorsque le détecteur de positions 34 est en position D2, ledit détecteur 34 étant alors situé en amont de la lentille 32, le faisceau est intercepté par le détecteur 34 produisant les impacts T3 et T4, pour la mesure du défaut en translation.

Les figures 2c et 2d représentent schématiquement la tête de focalisation selon un second et un troisième modes de réalisation.

Selon le second mode de réalisation montré sur la figure 2c, le composant optique de focalisation est un miroir parabolique 32a auquel on ajoute éventuellement un miroir plan 32b qui est un simple miroir de renvoi. Le principe de fonctionnement du dispositif est le même que celui montré sur la figure 2b, c'est-à-dire que le détecteur de positions 34 évolue selon deux positions D1 et D2. Le miroir parabolique 32a joue le même rôle que la lentille de focalisation des figures 2a et 2b, à savoir qu'il focalise le faisceau laser sur l'ouverture de la buse. Le miroir plan 32b permet simplement le renvoi du faisceau, à son entrée dans la tête de focalisation, sur le miroir parabolique 32a.

Le troisième mode de réalisation du dispositif est montré sur la figure 2d. Sa mise en oeuvre est à peu près identique à celle décrite pour la figure 2c, les miroirs de renvoi et de focalisation étant tous deux des miroirs sphériques.

Pour des applications industrielles où la puissance est supérieure à 3 kW, on utilise de préférence des miroirs convergents (plus résistants).

La figure 3 est une représentation très schématique de la tête de focalisation 14. Elle permet de montrer, sur un exemple de trajectoire du faisceau 3, les corrections à apporter à cette trajectoire pour que ledit faisceau soit aligné sur l'ouverture 42 de la buse.

En effet, le faisceau 3 incident, tel que représenté est focalisé par la lentille 32 et arrive, décentré, dans l'ouverture de la buse. Il est primordial que le faisceau ne soit pas arrêté par la buse elle-même et il est facile d'envisager les dégâts causés par le faisceau s'il arrivait sur la buse 40 elle-même au lieu de passer par son ouverture 42. Il faut donc corriger la trajectoire du faisceau 3.

Sur la figure 3, on voit qu'il y a deux défauts à corriger pour aligner le faisceau 3 sur l'ouverture de la buse 40 : un défaut angulaire $\Delta\alpha$ et un défaut en translation $\Delta d$.

Le défaut angulaire $\Delta\alpha$ représente l'angle formé par l'axe mécanique $O_5 O_6$ et l'axe 3' du faisceau, c'est-à-dire l'axe selon lequel évolue la trajectoire du faisceau 3.

Le défaut en translation $\Delta d$ est la distance entre l'axe $O_{10} O_{11}$ et l'axe 3' du faisceau 3 mesuré au niveau de la lentille 32, c'est-à-dire la distance entre le centre optique de la lentille et le centre du faisceau.

Ces deux défauts sont corrigés, par les moyens 4 de modification de la trajectoire du faisceau, à savoir les moyens 4, les moteurs 10A, 10B, 16A à 16F et les miroirs M1 à M10. Ces corrections peuvent être réalisées, à partir de moyens informatiques, à l'extérieur de la cellule active, si nécessaire.

La figure 4 représente le schéma de principe de la tête de focalisation 14 pour le procédé selon une des dispositions de l'invention. Elle permet de comprendre que l'information captée par le détecteur 34 de position serait la même si ledit détecteur était placé dans l'ouverture 42 de la buse 40. Dans les applications industrielles, la solution du détecteur 34 placé dans la position D', montrée sur la figure 4, est la plus simple à mettre en oeuvre.

Pour les applications nucléaires, il faut intégrer ce détecteur et le protéger vis-à-vis de l'environnement hostile, d'où la solution du détecteur placé en position D.

Dans le but de simplifier la description du procédé selon l'invention, on placera, dans les figures suivantes, le détecteur 34 dans la position D'.

Les figures 5a, 5b et 5c montrent les différentes étapes suivies pour déterminer le défaut angulaire $\Delta\alpha$.

La figure 5a montre la première information de position du faisceau obtenue. On parlera indifféremment d'information de position ou de tache focale. Cette première tache focale $T_1$ est obtenue pour une certaine trajectoire du faisceau. L'axe du faisceau présente un défaut angulaire $\Delta\alpha$ par rapport à l'axe mécanique $O_{10} O_{11}$.

Lorsque la première information de position $T_1$ a été déterminée, on retourne l'ensemble de la tête de focalisation 14 par rapport à l'axe mécanique $O_{10} O_{11}$. Ce retournement s'effectue par l'intermédiaire de l'unité 20 de rotation. Il a pour effet de permettre l'obtention d'une seconde tache focale sur le détecteur 34. En effet, dans le mode de réalisation préféré de l'invention, la tête de focalisation est tournée d'un angle $\beta$ égal à 180° par rapport à l'axe mécanique $O_{10} O_{11}$, cette valeur de $\beta$ permettant un calcul plus facile de la valeur de correction angulaire.

La figure 5b montre, pour l'exemple considéré, la tache focale $T_2$ obtenue après retournement de la tête de focalisation 14. On obtient alors une distance, entre les taches $T_1$ et $T_2$, de valeur $2\Delta\alpha$, pour un angle $\beta = 180°$.

La figure 5c montre le parallélisme obtenu entre l'axe $O_{10} O_{11}$ et l'axe 3' du faisceau 3 lorsque la trajectoire dudit faisceau a été corrigée de $\Delta\alpha$, en rapprochant $T_1$ et $T_2$ de moitié. La nouvelle tache serait alors T'. Il reste alors à corriger le défaut en translation $\Delta d$.

Les figures 6a et 6b montrent les étapes de correction du défaut en translation $\Delta d$. La tache T'

étant centrée sur le détecteur 34, grâce à la lentille 32 de focalisation, il faut escamoter ladite lentille pour corriger le défaut en translation.

La figure 6a montre la position du faisceau 3 sur le détecteur 34 lorsque la lentille 32 est dans sa position de retrait L' ; cette position du faisceau 3 est repérée par l'impact T3, aussi nommé tache $T_3$, sur le détecteur 34, comme précédemment pour le défaut angulaire.

La figure 6b montre la tache $T_4$ obtenue après retournement de 180° de la tête de focalisation. La distance ainsi obtenue est de 2 $\Delta$d. Il suffit a lors de corriger, en translation pure, la trajectoire du faisceau d'une valeur $\Delta$d.

Des moyens de calculs, tels qu'un ordinateur, permettent d'évaluer les positions exactes des taches, de les mémoriser et de calculer leur écart ainsi que les valeurs de correction à apporter.

Il est également possible, par le procédé décrit, de tourner la tête de focalisation d'un angle $\beta$ inférieur à 180°, si le moteur 22 ne permet pas des rotations de ± 90°. Ce procédé pourrait, par exemple, être appliquée pour $\beta$ = 30°, les calculs des valeurs de correction étant alors plus complexes mais tout à fait faisables.

La figure 6c montre comment se déplace la tache de l'impact T1 à T2, par exemple, dans le cas de $\beta$ = 30°. Il suffit de tracer un triangle isocèle de base (T1, T2) dont l'angle au sommet est de $\beta$; la position de l'axe de rotation est alors ce sommet. On remarquera le cas particulièrement simple, quand $\beta$ = 180°.

La distance h, séparant l'axe de rotation du milieu du segment b formé par T1 et T2, s'exprime de la façon suivante :

$$h = \frac{b}{2} \sqrt{\frac{1 + \cos \beta}{1 - \cos \beta}}.$$

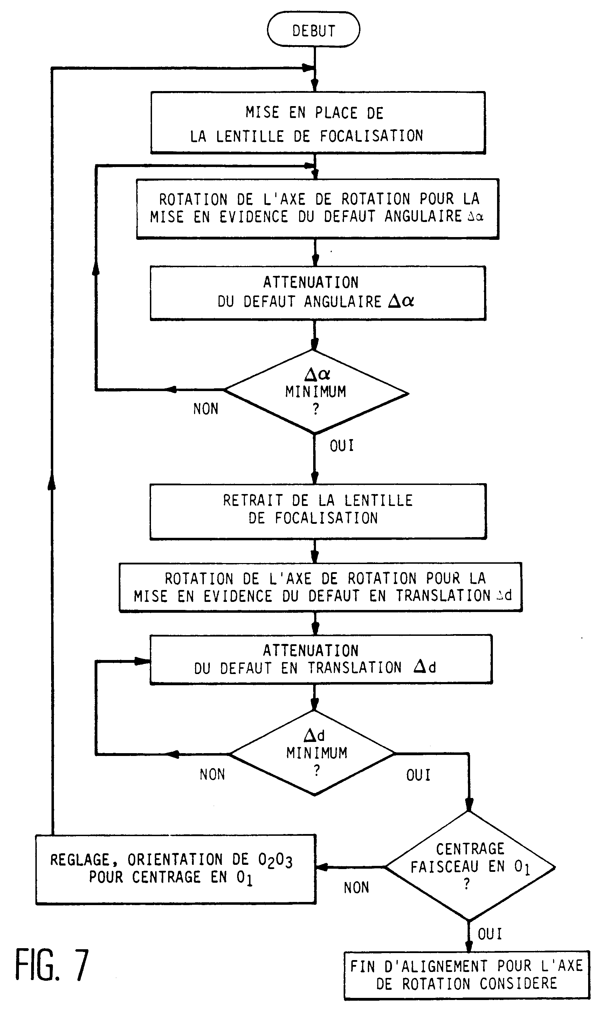

La figure 7 montre l'organigramme décrivant les étapes du procédé. La lentille étant mise en place, c'est-à-dire en position L, on modifie la trajectoire du faisceau jusqu'à obtenir un défaut angulaire $\Delta\alpha$ minimum en appliquant la méthode par rotation décrite précédemment. Ce défaut angulaire minimum étant obtenu, on retire la lentille 32 de focalisation pour déterminer le défaut en translation $\Delta$d en appliquant la méthode par rotation. Lorsque ce défaut $\Delta$d a été déterminé comme minimum, on vérifie si le faisceau est correctement centré sur l'orifice 8 d'introduction du faisceau dans la cellule active 6. Si le centrage n'est pas correct, la position du premier axe $O_2O_3$ de rotation du bras de transmission est modifiée angulairement par les moyens 10 d'orientation en rotation et tout le procédé décrit précédemment est réitéré.

Le procédé selon l'invention peut être appliqué à des robots polyarticulés. Le faisceau est alors réglé coaxialement avec chaque axe de rotation dudit robot en utilisant le même procédé et les mêmes moyens que ceux décrits pour la tête de focalisation.

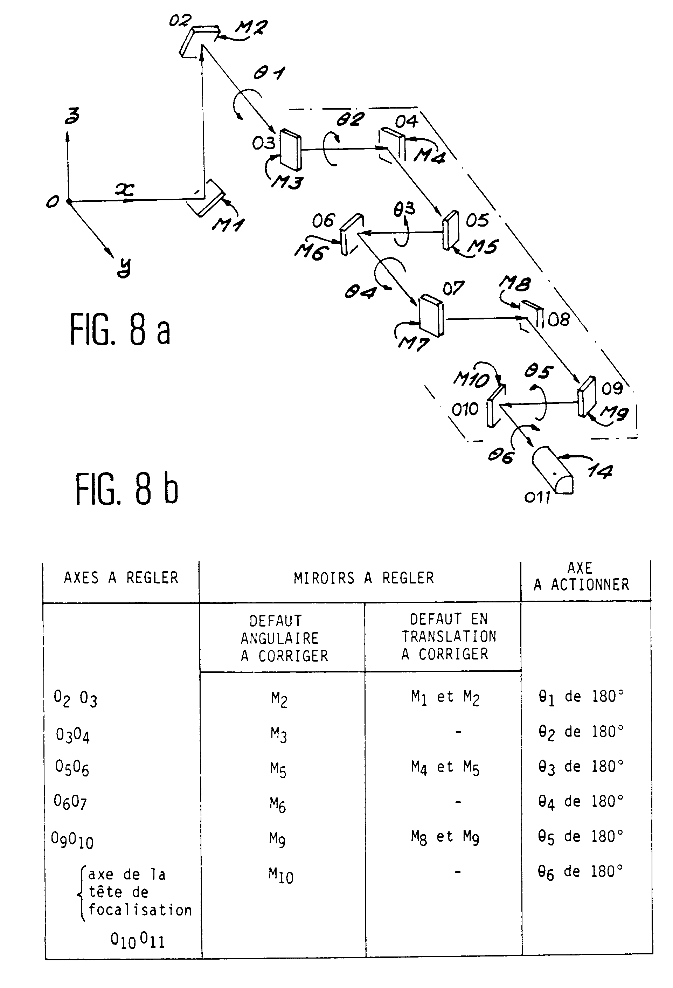

Un exemple d'application est montré en figure 8a, son tableau explicatif étant donné en figure 8b.

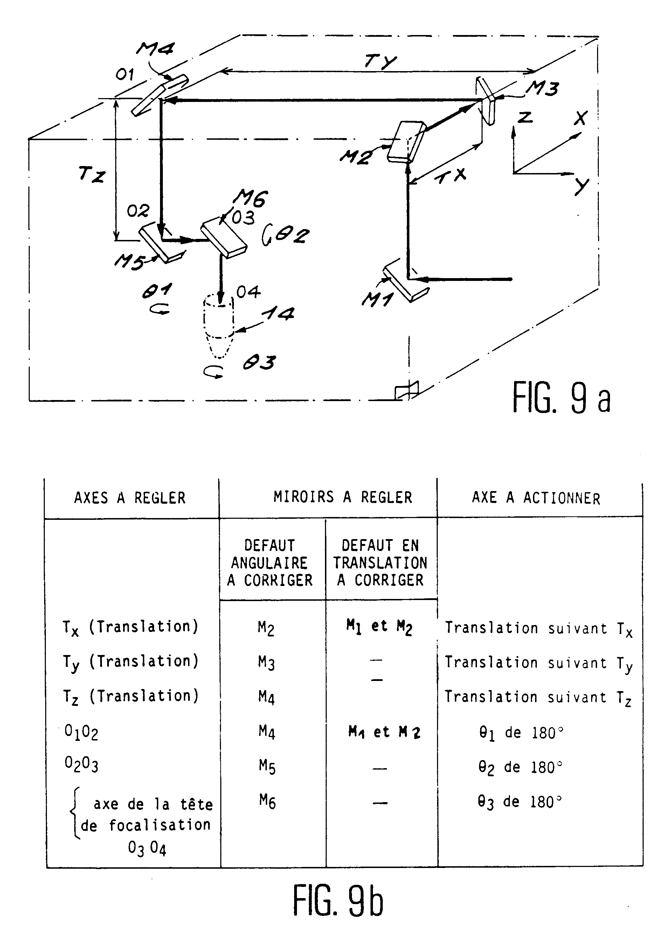

Cet exemple représente le cas du robot polyarticulé comprenant quatre segments, qui est représenté sur la figure 1. Sur cette figure 8, ainsi que sur la figure 9 suivante, les segments et les articulations du bras de transmission sont représentés de façon symbolique par, respectivement, leur axe de rotation et par leur axe de rotation et leurs miroirs.

Sur le tableau, une première colonne donne les axes à régler, une seconde colonne indique les miroirs à régler pour corriger le défaut angulaire $\Delta\alpha$ et une troisième colonne indique les miroirs à régler pour corriger le défaut en translation $\Delta$d.

De façon plus précise, le premier réglage du faisceau laser consiste à corriger le défaut angulaire dans le segment d'axe $O_2O_3$ par modification du positionnement du miroir M2. Le défaut en translation est alors corrigé par le réglage des miroirs M1 et M2. Ces défauts sont corrigés en appliquant la méthode de rotation décrite précédemment. Aussi, par une rotation $\theta$1 de 180° de l'ensemble en aval du segment d'axe $O_2O_3$ du bras de rotation, autour de l'axe $O_2O_3$, on corrige les défauts $\Delta\alpha$ et $\Delta$d du faisceau laser dans le segment d'axe $O_2O_3$.

Par la rotation $\theta$2 de 180°, on corrige le défaut en translation dans le segment d'axe $O_3O_4$ en modifiant la position du miroir M3.

De même, par la rotation $\theta$3, on corrige les défauts angulaire et en translation selon l'axe $O_5O_6$ en réglant, respectivement, le miroir M5 et les miroirs M4 et M5.

De plus, la rotation $\theta$4 de 180° permet de corriger le défaut angulaire dans le segment d'axe $O_6O_7$ par réglage du miroir M6.

En outre, la rotation $\theta$5 de 180° permet de déterminer les défauts angulaire et en translation du faisceau laser par rapport à l'axe $O_9O_{10}$. Un réglage du miroir M9 et des miroirs M9 et M10 assure une correction desdits défauts angulaire et en translation.

Enfin, le faisceau laser est corrigé angulairement selon le dernier axe du bras de transmission, à savoir l'axe $O_{10}O_{11}$ de la tête de focalisation, par modification de la position du miroir M10, suite à une rotation $\theta$6 de 180° de la tête de focalisation autour de son axe.

Un second exemple d'application est montré en figure 9a. Il s'agit d'un robot portique du type industriel de trois axes de translations et deux de rotations, ces derniers étant situés en extrémité de robot.

Le tableau explicatif du réglage de ce robot est donné sur la figure 9b.

Dans cet exemple, les références ($\theta1$, $\theta2$, ... , $O_1O_2$, ... , par exemple) représentent des axes, des rotations, etc. , autres que celles de l'exemple des figures 8a et 8b. Elles ont été conservées pour simplifier la compréhension des figures.

Dans cet exemple, on détermine tout d'abord les défauts angulaire et en translation du faisceau suivant l'axe TX par une translation suivant l'axe TX de l'ensemble en aval du segment à régler. Ces défauts sont corrigés, respectivement, par réglage du miroir M2 et des miroirs M1 et M2.

Par une translation suivant l'axe TY, puis suivant l'axe TZ, on détermine les défauts angulaires selon les axes TY et TZ, puis on corrige ces défauts par réglage du miroir M3, puis du miroir M4.

Par la rotation $\theta1$ de 180° autour de l'axe $O_1O_2$, on détermine les défauts angulaire et en translation selon l'axe $O_1O_2$, que l'on corrige par réglage, respectivement, du miroir M4 et des miroirs M1 et M2.

De plus, on corrige le défaut angulaire du faisceau dans le segment d'axe $O_2O_3$ par une rotation $\theta2$ de 180°, puis une modification du positionnement du miroir M5.

Enfin, le défaut angulaire du faisceau dans la tête de focalisation est corrigé, à l'aide de la rotation $\theta3$ de 180° autour de l'axe $O_3O_4$ de la tête de focalisation et par réglage du miroir M6.

Dans une telle application, lorsque tous les mouvements des miroirs sont motorisés, le réglage peut être effectué entièrement à distance, c'est-à-dire sans intervention directe sur aucun segment du bras du robot, ceci dans le cas où ce robot polyarticulé aurait a évoluer en milieu nucléaire, c'est-à-dire en milieu hostile. Bien sûr, cette motorisation coûteuse n'est pas nécessaire pour un robot en milieu industriel où l'intervention humaine n'est soumise à aucune contrainte.

## Revendications

1. Procédé d'alignement d'un faisceau laser sur l'ouverture d'une buse, dans lequel on utilise :
   - un laser (2) pilote ;
   - un bras de transmission comportant au moins un segment, des moyens d'introduction de faisceau laser selon un premier axe ($O_2O_3$) dans ledit bras, ainsi qu'une tête de focalisation (14) située à l'extrémité du bras de transmission, orientée selon un dernier axe ($O_{10}O_{11}$) et munie d'au moins un composant optique de focalisation (32) ;
   - des moyens (4, 10A, 10B, 16A-16F, M1-M10) de modification de trajectoire du faisceau laser (3) en translation et en rotation par rapport à un axe du bras de transmission,

caractérisé en ce que la tête de focalisation est munie d'un détecteur (34) de positions apte à mesurer la position du faisceau laser par rapport au dernier axe et en ce qu'il consiste, pour tout axe de segment du bras de transmission, partant du laser vers la tête de focalisation :

a) à mesurer un défaut angulaire $\Delta\alpha$ entre le faisceau laser et l'axe du segment à régler, en focalisant le faisceau laser au moyen du composant optique de focalisation et en dirigeant ce faisceau laser vers le détecteur de positions selon une première et une seconde positions angulaires obtenues en agissant sur des moyens de rotation (16A-16F) de chacun des segments autour de leur axe de façon à ce que ledit détecteur mesure deux positions du faisceau laser ;

b) à modifier ce défaut angulaire par réglage des moyens de modification de trajectoire du faisceau laser ;

c) à réitérer les étapes a) et b) jusqu'à l'obtention d'un défaut angulaire minimum ;

d) à mesurer un défaut en translation $\Delta d$ entre le faisceau laser et l'axe du segment à régler en dirigeant le faisceau laser vers le détecteur de positions de façon à ce qu'il mesure la position du faisceau laser dans une première et une seconde positions angulaires obtenues à l'aide des moyens de rotation, cette mesure de position du faisceau étant effectuée soit en amont du composant optique de focalisation en déplaçant le détecteur de positions, soit en aval dudit composant optique, en escamotant ce composant optique ;

e) à modifier ce défaut en translation par réglage des moyens de modification de trajectoire du faisceau laser ;

f) à réitérer les étapes d) et e) jusqu'à l'obtention d'un défaut en translation minimum.

2. Procédé selon la revendication 1, caractérisé en ce qu'il comporte également les étapes :

g) vérifier l'alignement du faisceau laser sur les moyens d'introduction dudit faisceau ; et

h) lorsque cet alignement n'est pas réalisé, à modifier l'orientation du premier axe $O_2O_3$ du bras de transmission et à réitérer les étapes a) à f).

**3.** Procédé selon l'une quelconque des revendications 1 et 2, caractérisé en ce que la mesure du défaut angulaire Δα consiste à :

- déterminer, par le détecteur de positions, une première tache focale (T1) du faisceau laser ;
- effectuer une rotation, d'un angle $\beta$, du segment du bras de transmission à régler ainsi que des segments aval dudit segment à régler, et/ou de la tête de focalisation ;
- déterminer, par le détecteur de positions, une seconde tache focale (T2) du faisceau laser ;
- évaluer la distance h entre l'axe du bras à régler et le milieu du segment formé par (T1) et (T2) à partir de la distance b mesurée entre la tache (T1) et la tache (T2), cette distance h correspondant à :

$$ h = \frac{b}{2} \sqrt{\frac{1 + \cos \beta}{1 - \cos \beta}} $$

**4.** Procédé selon l'une quelconque des revendications 1 à 3, caractérisé en ce que la mesure du défaut en translation Δd consiste à :

- déterminer, par le détecteur de positions, un premier impact (T3) du faisceau laser ;
- effectuer une rotation, d'un angle $\beta$, du segment du bras de transmission à régler, ainsi que des segments aval dudit segment à régler et/ou de la tête de focalisation ;
- déterminer, par le détecteur de positions, un second impact (T4) du faisceau laser ;
- évaluer la distance H entre l'axe du bras à régler et le milieu du segment formé par (T3) et (T4) à partir de la distance B mesurée entre l'impact (T3) et l'impact (T4), cette distance H correspondant à :

$$ H = \frac{B}{2} \sqrt{\frac{1 + \cos \beta}{1 - \cos \beta}} $$

**5.** Dispositif de réglage pour bras articulé de transmission de faisceau laser comprenant :

- un laser (2) pour émettre un faisceau (3) ;
- une tête de focalisation (14) assurant la convergence du faisceau sur l'ouverture d'une buse, ainsi que des moyens optiques de focalisation (32, 36, 38) ;
- un bras de transmission comportant au moins un segment orienté selon un premier axe, ledit bras étant apte à guider ledit faisceau vers la tête de focalisation orientée selon un dernier axe ;
- des moyens (4, 10A, 10B, 16A-16F, M1-M10) de modification de trajectoire du faisceau laser en translation par rapport à un axe du bras ; et
- des moyens de rotation (16A-16F) pour tourner chacun des segments du bras de transmission et/ou la tête de focalisation autour de leur axe respectif,

caractérisé en ce que ladite tête de focalisation est munie d'un détecteur (34) de positions apte à mesurer la position du faisceau laser par rapport au dernier axe, en ce que, soit le détecteur de positions est déplaçable, soit les moyens optiques de focalisation sont, au moins en partie, escamotables pour permettre de déterminer un écart angulaire Δα et un écart en translation Δd entre la trajectoire du faisceau et les axes des segments du bras et/ou de la tête de focalisation, et en ce qu'il comporte des moyens de calcul pour évaluer et mémoriser les différentes positions du faisceau laser, puis calculer les écarts en translation et angulaire entre ces positions.

**6.** Dispositif selon la revendication 5, caractérisé en ce que les moyens de rotation comportent un moteur (22) assurant une rotation d'un angle $\beta$ de la tête de focalisation autour de son axe $O_{10}O_{11}$ afin de décaler le faisceau laser sur le détecteur de positions, ledit moteur étant fixé de façon à ce que la tête de focalisation tourne par rapport audit bras.

**7.** Dispositif selon la revendication 5 ou 6, caractérisé en ce que les moyens de rotation comportent en outre une pluralité de moteurs (16A-16E), chaque moteur étant associé à un segment à régler afin d'assurer audit segment une rotation d'angle $\beta$ autour de son axe pour décaler le faisceau laser sur le détecteur de positions contenu dans la tête de focalisation.

**8.** Dispositif selon l'une quelconque des revendications 5 à 7, caractérisé en ce que les moyens optiques de focalisation comportent un premier miroir (36) escamotable assurant, dans une première position $M_E$, le renvoi du faisceau sur le détecteur et, dans une seconde position M'$_E$, le passage direct du faisceau vers l'ouverture de la buse.

9. Dispositif selon l'une quelconque des revendications 5 à 8, caractérisé en ce que les moyens optiques de focalisation comportent une lentille de focalisation (32) escamotable.

10. Dispositif selon l'une quelconque des revendications 5 à 8, caractérisé en ce que les moyens optiques de focalisation comportent un miroir parabolique pour focaliser le faisceau laser sur l'ouverture de la buse.

11. Dispositif selon l'une quelconque des revendications 5 à 8, caractérisé en ce que les moyens optiques de focalisation comportent deux miroirs sphériques assurant la focalisation du faisceau laser sur l'ouverture de la buse.

**Claims**

1. Procedure for alignment of a laser beam with respect to the opening in a nozzle, in which use is made of:
   - a pilot laser (2);
   - a transmission arm comprising at least one segment, means for introducing a laser beam along a first axis ($O_2O_3$) in the said arm, as well as a focusing head (14) located at the end of the transmission arm, oriented along a final axis ($O_{10}O_{11}$) and equipped with at least one optical focusing component (32);
   - means (4, 10A, 10B, 16A-16F, M1-M10) for modifying the path of the laser beam (3) translationally and rotationally in relation to an axis of the transmission arm, characterized in that the focusing head is equipped with a position detector (34) capable of measuring the position of the laser beam in relation to the final axis and in that it consists, for any segment axis of the transmission arm, starting from the laser towards the focusing head:
   a) in measuring an angular misalignment $\Delta\alpha$ between the laser beam and the axis of the segment to be adjusted, by focusing the laser beam by means of the optical focusing component and by directing this laser beam towards the position detector according to a first angular position and a second angular position, these angular positions being obtained by acting on the means (16A-16F) for rotating each of the segments about their axis so that the said detector measures two positions of the laser beam;
   b) in modifying this angular misalignment by adjusting the means for modifying the path of the laser beam;
   c) in repeating steps a) and b) until a minimum angular misalignment is obtained;
   d) in measuring a translational misalignment $\Delta d$ between the laser beam and the axis of the segment to be adjusted by directing the laser beam towards the position detector so that it measures the position of the laser beam in a first angular position and a second angular position, these angular positions being obtained with the aid of the rotation means, this measurement of the position of the beam being made either upstream of the optical focusing component, by shifting the position detector, or downstream of the said optical component, by retracting this optical component;
   e) in modifying this translational misalignment by adjusting the means for modifying the path of the laser beam;
   f) in repeating steps d) and e) until a minimum translational misalignment is obtained.

2. Procedure according to Claim 1, characterized in that it also comprises the steps:
   g) of checking the alignment of the laser beam with respect to the means for introducing the said beam; and
   h) when this alignment is not achieved, of modifying the orientation of the first axis $O_2O_3$ of the transmission arm and of repeating steps a) to f).

3. Procedure according to either one of Claims 1 and 2, characterized in that the measurement of the angular misalignment $\Delta\alpha$ consists in:
   - determining, using the position detector, a first focal spot (T1) of the laser beam;
   - rotating, through an angle $\beta$, the segment of the transmission arm to be adjusted as well as the segments downstream of the said segment to be adjusted, and/or the focusing head;
   - determining, using the position detector, a second focal spot (T2) of the laser beam;
   - evaluating the distance h between the axis of the arm to be adjusted and the middle of the segment formed by (T1) and (T2) from the distance b measured between the spot (T1) and the spot (T2), this distance h corresponding to:

$$h = \frac{b}{2} \sqrt{\frac{1 + \cos \beta}{1 - \cos \beta}}$$

4. Procedure according to any one of Claims 1 to 3, characterized in that the measurement of the translational misalignment $\Delta d$ consists in:
   - determining, using the position detector, a first point of impact (T3) of the laser beam;
   - rotating, through an angle $\beta$, the segment of the transmission arm to be adjusted, as well as the segments downstream of the said segment to be adjusted and/or the focusing head;
   - determining, using the position detector, a second point of impact (T4) of the laser beam;
   - evaluating the distance H between the axis of the arm to be adjusted and the middle of the segment formed by (T3) and (T4) from the distance B measured between the point of impact (T3) and the point of impact (T4), this distance H corresponding to:

$$H = \frac{B}{2} \sqrt{\frac{1 + \cos \beta}{1 - \cos \beta}}$$

5. Adjustment device for an articulated laser-beam transmission arm including:
   - a laser (2) for emitting a beam (3);
   - a focusing head (14) providing for the convergence of the beam onto the opening of a nozzle, as well as optical focusing means (32, 36, 38);
   - a transmission arm comprising at least one segment oriented along a first axis, the said arm being capable of guiding the said beam towards the focusing head oriented along a final axis;
   - means (4, 10A, 10B, 16A-16F, M1-M10) for modifying the path of the laser beam translationally in relation to an axis of the arm; and
   - rotation means (16A-16F) for rotating each of the segment of the transmission arm and/or the focusing head about their respective axis,
characterized in that the said focusing head is equipped with a position detector (34) capable of measuring the position of the laser beam in relation to the final axis, in that either the position detector can be shifted or the optical focusing means can, at least in part, be retracted in order to make it possible to determine an angular misalignment $\Delta\alpha$ and a translational misalignment $\Delta d$ between the path of the beam and the axes of the segments of the arm and/or of the focusing head, and in that it comprises calculating means for evaluating and storing in memory the various positions of the laser beam and then calculating the translational and angular differences between these positions.

6. Device according to Claim 5, characterized in that the rotation means comprise a motor (22) for rotating the focusing head through an angle $\beta$ about its axis $O_{10}O_{11}$ so as to offset the laser beam with respect to the position detector, the said motor being fixed so that the focusing head rotates in relation to the said arm.

7. Device according to Claim 5 or 6, characterized in that the rotation means furthermore comprise a plurality of motors (16A-16E), each motor being associated with one segment to be adjusted so as to rotate the said segment through an angle $\beta$ about its axis in order to offset the laser beam with respect to the position detector contained in the focusing head.

8. Device according to any one of Claims 5 to 7, characterized in that the optical focusing means comprise a first retractable mirror (36) which, in a first position $M_E$, reflects the beam back onto the detector and, in a second position $M'_E$, allows the beam to pass directly to the opening in the nozzle.

9. Device according to any one of Claims 5 to 8, characterized in that the optical focusing means comprise a retractable focusing lens (32).

10. Device according to any one of Claims 5 to 8, characterized in that the optical focusing means comprise a parabolic mirror for focusing the laser beam onto the opening in the nozzle.

11. Device according to any one of Claims 5 to 8, characterized in that the optical focusing means comprise two spherical means focusing the laser beam onto the opening in the nozzle.

## Patentansprüche

1. Verfahren zur Ausrichtung eines Laserstrahls auf die Öffnung einer Düse, bei dem man verwendet:

   - einen Pilot-Laser (2);
   - einen Übertragungsarm, umfassend wenigstens ein Segment, Einleiteinrichtungen des Laserstrahl entsprechend einer ersten Achse ($O_2O_3$) in den besagten Arm sowie einen Fokussierkopf (14), der sich am Ende des Übertragungsarms befindet, ausgerichtet entsprechend einer letzten Achse ($O_{10}O_{11}$) und ausgerüstet mit wenigstens einem optischen Bauteil zur Fokussierung (32);
   - Einrichtungen (4, 10A, 10B, 16A-16F, M1-M10) zur Veränderung der Bahn des Laserstrahls (3) durch Translation und durch Rotation in bezug auf eine Achse des Übertragungsarms, **dadurch gekennzeichnet**,

   daß der Fokussierkopf versehen ist mit einem Postitionsdetektor (34), der die Position des Laserstrahls in bezug auf die letzte Achse messen kann, und daß es darin besteht, für jede Segmentachse des Übertragungsarms, ausgehend vom Laser in Richtung Fokussierkopf:

   a) einen Winkelfehler $\Delta\alpha$ zu messen zwischen dem Laserstrahl und dem ein- bzw. nachzustellenden Segment, indem man den Laserstrahl fokussiert mittels des optischen Fokussierbauteils und indem man diesen Laserstrahl auf den Positionsdetektor ausrichtet entsprechend einer ersten und einer zweiten Winkelstellung, erhalten durch Betätigung von Einrichtungen (16A-16F) zum Drehen von jedem der Segmente um seine Achse, so daß der genannte Detektor zwei Positionen des Laserstrahls mißt;

   b) diesen Winkelfehler zu verändern durch Nachstellung der Einrichtungen zur Bahnveränderung des Laserstrahls;

   c) die Schritte a) und b) zu wiederholen bis zum Erreichen eines minimalen Winkelfehlers;

   d) einen Translationsfehler $\Delta d$ zwischen dem Laserstrahl und der Achse des nachzustellenden Segments zu messen, indem man den Laserstrahl auf den Positionsdetektor ausrichtet, so daß er die Position des Laserstrahls in einer ersten und einer zweiten Winkelposition mißt, erhalten mit Hilfe der Rotationseinrichtungen, wobei diese Messung der Position des Laserstrahls entweder vor dem optischen Fokussierbauteil durchgeführt wird, indem der Positionsdetektor verschoben wird, oder hinter besagtem optischen Bauteil, indem dieses optische Bauteil weggeschwenkt wird;

   e) diesen Translationsfehler zu verändern durch Nachstellung der Einrichtungen zur Bahnveränderung des Laserstrahls;

   f) die Schritte d) und e) zu wiederholen bis zum Erreichen eines minimalen Translationsfehlers;

2. Verfahren nach Anspruch 1, dadurch gekennzeichnet, daß es ebenfalls folgende Schritte umfaßt:

   g) Überprüfen der Ausrichtung des Laserstrahls auf die Einrichtungen zur Einleitung des besagten Strahls; und

   h) wenn diese Ausrichtung nicht hergestellt ist, die Orientierung der ersten Achse $O_2O_3$ des Übertragungsarms zu verändern und die Schritte a) bis f) zu wiederholen.

3. Verfahren nach einem der Ansprüche 1 und 2, dadurch gekennzeichnet, daß die Messung des Winkelfehlers $\Delta\alpha$ folgende Schritte umfaßt:

   - Feststellen eines ersten Fokalflecks (T1) des Laserstrahls durch den Positionsdetektor;
   - Ausführen einer Drehung, um einen Winkel $\beta$, des einzustellenden Segments des Übertragungsarms sowie der Segmente hinter, in Strahlrichtung, besagtem einzustellendem Segment und/oder des Fokussierkopfes;
   - Feststellen eines zweiten Fokalflecks (T2) durch den Positionsdetektor;
   - Bewerten des Abstands h zwischen der Achse des einzustellenden Arms und der Mitte des durch (T1) und (T2) gebildeten Segments aufgrund des Abstands b, gemessen zwischen dem Fleck (T1) und dem Fleck (T2), wobei dieser Abstand h entspricht:

$$h = -\frac{b}{2}\sqrt{\frac{1 + \cos\beta}{1 - \cos\beta}}$$

4. Verfahren nach einem der Ansprüche 1 bis 3, dadurch gekennzeichnet, daß die Messung des Translationsfehlers $\Delta d$ folgende Schritte umfaßt:

- Feststellen eines ersten Auftreffens (T3) des Laserstrahls durch den Positionsdetektor;
- Ausführen einer Drehung, um einen Winkel $\beta$, des einzustellenden Segments des Übertragungsarms sowie der Segmente hinter, in Strahlrichtung, besagtem einzustellendem Segment und/oder des Fokussierkopfes;
- Feststellen eines zweiten Auftreffens (T4) des Laserstrahls durch den Positionsdetektor;
- Bewerten des Abstands H zwischen der Achse des einzustellenden Arms und der Mitte des durch (T3) und (T4) gebildeten Segments aufgrund des Abstands B, gemessen zwischen dem Treffer (T3) und dem Treffer (T4), wobei dieser Abstand H entspricht:

$$H = -\frac{B}{2} \frac{\sqrt{1 + \cos \beta}}{1 - \cos \beta}$$

5. Vorrichtung zum Einstellen eines gelenkigen Laserstrahl-Übertragungsarms, umfassend:
   - einen Laser (2) zur Emission eines Strahls (3);
   - einen Fokussierkopf (14), um den Strahl auf die Öffnung einer Düse zu konvergieren, sowie optische Fokussiereinrichtungen (32, 36, 38);
   - einen wenigstens ein entsprechend einer ersten Achse ausgerichtes Segment umfassenden Übertragungsarm, der den genannten Strahl zu dem entsprechend einer letzten Achse orientierten Fokussierkopf leiten kann;
   - Einrichtungen (4, 10A, 10B, 16A-16F, M1-M10) zur Veränderung der Bahn des Laserstrahls durch Translation in bezug auf eine Achse des Arms; und
   - Rotationseinrichtungen (16A-16F), um jedes der Segmente des Übertragungsarms und/oder des Fokussierkopfs um seine jeweilige Achse zu drehen, **dadurch gekennzeichnet**, daß der Fokussierkopf mit einem Positionsdetektor (34) ausgestattet ist, der die Position des Laserstrahls in bezug auf die letzte Achse messen kann, dadurch, daß entweder der Positionsdetektor verschiebbar ist oder die optischen Fokussierungseinrichtungen wenigstens teilweise wegschwenkbar bzw. versenkbar sind, um einen Winkelabstand $\Delta\alpha$ und einen Translationsabstand $\Delta d$ zwischen der Bahn des Strahls und den Achsen der Segmente des Arms und/oder des Fokussierkopfs zu ermitteln, und dadurch, daß sie Recheneinrichtungen umfaßt, um die verschiedenen Positionen des Laserstrahls zu bewerten und abzuspeichern und dann die Translations- und Winkelabstände zwischen diesen Positionen zu berechnen.

6. Vorrichtung nach Anspruch 5, dadurch gekennzeichnet, die Rotationseinrichtungen einen Motor (22) umfassen, der eine Rotation des Fokussierkopfs um einen Winkel $\beta$ um seine Achse $O_{10}O_{11}$ bewirkt, um den Laserstrahl auf den Positionsdetektor zu verschieben, wobei besagter Motor so befestigt ist, daß sich der Fokussierkopf dreht in bezug auf den genannten Arm.

7. Vorrichtung nach Anspruch 5 oder 6, dadurch gekennzeichnet, daß die Rotationseinrichtungen außerdem eine Vielzahl Motoren (16A-16E) umfassen, wobei jeder Motor einem einzustellen Segment zugeordnet ist, um eine Rotation des besagten Segments um einen Winkel $\beta$ um seine Achse zu bewirken, um den Laserstrahl auf den Positionsdetektor zu verschieben, der in dem Fokussierkopf enthalten ist.

8. Vorrichtung nach einem der Ansprüche 5 bis 7, dadurch gekennzeichnet, daß die optischen Fokussiereinrichtungen einen ersten wegschwenkbaren Spiegel (36) umfassen, der in einer ersten Stellung $M_E$ den Strahl zurückwirft auf den Detektor und in einer zweiten Stellung $M'_E$ den Strahl durchläßt in Richtung Düsenöffnung.

9. Vorrichtung nach einem der Ansprüche 5 bis 8, dadurch gekennzeichnet, daß die optischen Fokussiereinrichtungen eine versenkbare Fokussierlinse (32) umfassen.

10. Vorrichtung nach einem der Ansprüche 5 bis 8, dadurch gekennzeichnet, daß die optischen Fokussiereinrichtungen einen Parabolspiegel umfassen, um den Laserstrahl auf die Düsenöffnung zu fokussieren.

11. Vorrichtung nach einem der Ansprüche 5 bis 8, dadurch gekennzeichnet, daß die optischen Fokussiereinrichtungen zwei Kugelspiegel umfassen, die die Fokussierung des Laserstrahls auf die Düsenöffnung bewirken.

FIG. 1

FIG. 2a

FIG. 2 b

FIG. 2 c

FIG. 2d

FIG. 3

FIG. 4

FIG. 5 a

FIG. 5 b

FIG. 5 c

FIG. 6 a

FIG. 6 b

FIG. 6 c

```
                          ┌─────────┐
                          │  DEBUT  │
                          └─────────┘
                               │
          ┌────────────────────┼──────────────────────┐
          │                    ▼
          │        ┌───────────────────────────┐
          │        │   MISE EN PLACE DE         │
          │        │   LA LENTILLE DE FOCALISATION │
          │        └───────────────────────────┘
          │                    │
          │    ┌───────────────┼───────────────────┐
          │    │               ▼
          │    │   ┌─────────────────────────────────┐
          │    │   │ ROTATION DE L'AXE DE ROTATION POUR LA │
          │    │   │ MISE EN EVIDENCE DU DEFAUT ANGULAIRE Δα │
          │    │   └─────────────────────────────────┘
          │    │               │
          │    │               ▼
          │    │   ┌─────────────────────────┐
          │    │   │      ATTENUATION         │
          │    │   │   DU DEFAUT ANGULAIRE Δα  │
          │    │   └─────────────────────────┘
          │    │               │
          │    │               ▼
          │    │            ╱Δα╲
          │    └─── NON ───╱ MINIMUM ╲
          │               ╲    ?    ╱
          │                ╲       ╱
          │                   │ OUI
          │                   ▼
          │        ┌───────────────────────────┐
          │        │   RETRAIT DE LA LENTILLE   │
          │        │   DE FOCALISATION          │
          │        └───────────────────────────┘
          │                   │
          │                   ▼
          │        ┌─────────────────────────────────┐
          │        │ ROTATION DE L'AXE DE ROTATION POUR LA │
          │        │ MISE EN EVIDENCE DU DEFAUT EN TRANSLATION Δd │
          │        └─────────────────────────────────┘
          │                   │
          │   ┌───────────────┼───────────────┐
          │   │               ▼
          │   │    ┌─────────────────────────┐
          │   │    │      ATTENUATION         │
          │   │    │   DU DEFAUT EN TRANSLATION Δd │
          │   │    └─────────────────────────┘
          │   │               │
          │   │               ▼
          │   │            ╱Δd╲
          │   └─── NON ───╱ MINIMUM ╲── OUI ──┐
          │               ╲    ?    ╱          │
          │                ╲       ╱           ▼
          │                                 ╱CENTRAGE╲
          │  ┌──────────────────────────┐  ╱ FAISCEAU EN O₁ ╲
          │  │ REGLAGE, ORIENTATION DE O₂O₃ │◄─ NON ─╲    ?    ╱
          │  │ POUR CENTRAGE EN O₁       │          ╲       ╱
          │  └──────────────────────────┘              │ OUI
          └───────────────────────────────────          ▼
                                          ┌─────────────────────────┐
                                          │ FIN D'ALIGNEMENT POUR L'AXE │
                                          │ DE ROTATION CONSIDERE    │
                                          └─────────────────────────┘
```

FIG. 7

FIG. 8 a

FIG. 8 b

| AXES A REGLER | MIROIRS A REGLER | | AXE A ACTIONNER |
|---|---|---|---|
| | DEFAUT ANGULAIRE A CORRIGER | DEFAUT EN TRANSLATION A CORRIGER | |
| $0_2\ 0_3$ | $M_2$ | $M_1$ et $M_2$ | $\theta_1$ de 180° |
| $0_3 0_4$ | $M_3$ | - | $\theta_2$ de 180° |
| $0_5 0_6$ | $M_5$ | $M_4$ et $M_5$ | $\theta_3$ de 180° |
| $0_6 0_7$ | $M_6$ | - | $\theta_4$ de 180° |
| $0_9 0_{10}$ | $M_9$ | $M_8$ et $M_9$ | $\theta_5$ de 180° |
| { axe de la tête de focalisation $0_{10} 0_{11}$ | $M_{10}$ | - | $\theta_6$ de 180° |

FIG. 9 a

| AXES A REGLER | MIROIRS A REGLER | | AXE A ACTIONNER |
|---|---|---|---|
| | DEFAUT ANGULAIRE A CORRIGER | DEFAUT EN TRANSLATION A CORRIGER | |
| $T_x$ (Translation) | $M_2$ | $M_1$ et $M_2$ | Translation suivant $T_x$ |
| $T_y$ (Translation) | $M_3$ | — | Translation suivant $T_y$ |
| $T_z$ (Translation) | $M_4$ | — | Translation suivant $T_z$ |
| $0_1 0_2$ | $M_4$ | $M_1$ et $M_2$ | $\theta_1$ de 180° |
| $0_2 0_3$ | $M_5$ | — | $\theta_2$ de 180° |
| { axe de la tête de focalisation $0_3 0_4$ | $M_6$ | — | $\theta_3$ de 180° |

FIG. 9b